# EUROPÄISCHE PATENTSCHRIFT

(11) **EP 0 642 180 B1**
(45) Veröffentlichungstag und Bekanntmachung des Hinweises auf die Patenterteilung: **23.06.1999**
(21) Anmeldenummer: 94112105.5
(22) Anmeldetag: 03.08.1994
(51) Int. Cl.: H01L 41/09, H02N 2/00

(54) **Aktuator für ein bewegbares Element**
Actuator for a movable member
Organe d'actionnement pour un membre mobile

(30) Priorität: 06.08.1993 DE 4326479
(43) Veröffentlichungstag der Anmeldung: 08.03.1995
(73) Patentinhaber: DaimlerChrysler AG, 70567 Stuttgart (DE)
(72) Erfinder: Schöner, Hans-Peter, Dr., D-64397 Modautal (DE)
(74) Vertreter: Fröhling, Werner Otto, Dr.

(56) Entgegenhaltungen:
- EP-A- 0 289 734
- EP-A- 0 297 574
- DE-C- 4 305 894
- US-A- 5 017 820
- US-A- 5 199 701

## Beschreibung

Die Erfindung betrifft einen Aktuator für ein bewegbares Element mit einem Schwingungsantrieb, um das bewegbare Element anzutreiben, wobei das bewegbare Element in Kontakt mit dem Schwingungsantrieb gehalten wird. Ein solcher Aktuator ist z.B. aus der Druckschrift DE 42 16 238 bekannt. Als Schwingungsantrieb dient dabei ein hohlzylinderförmiger Schwingstator, der mit einem Rotor als bewegbarem Element unter Druck in Kontakt steht, wobei die Kontaktfläche mit einem geeigneten Reibbelag versehen ist. Mittels Dehnkörper, z.B. pioezoelektrischen, Elektrostiktions- oder Magnetostriktionselementen, werden in dem elastischen Stator Wanderwellen angeregt. Die Oberflächenelemente des Stators im Bereich der Kontaktflächen mit dem Rotor bewegen sich dabei auf elliptischen Bahnen. Die Anregung der Wanderwellen erfolgt bei diesem Motor durch Aktoren, die radialsymmetrisch und senkrecht zur Zylinderachse und gegeneinander verdreht angeordnet und durch Klemmkräfte an gegenüberliegenden Seiten des Stators gehalten werden. Da die Schwingungsamplitude der Oberflächenelemente über einen großen Teil der Mantelfläche gleich hoch ist und nur in den Randzonen der Zylinderenden bei Schwingungsmodi ohne Knotenkreisen erhöhte Schwingungsamplituden auftreten, erhält man bei einem solchen Motor eine große Fläche gleichförmiger Vortriebsbewegungen. Bei diesem bekannten Motor ist das bewegbare Element als im wesentlichen starrer Rotor, dessen Form im vorgesehenen Kontaktbereich der zylinderförmigen Mantelfläche des Schwingstators angepaßt ist, ausgebildet. Ein weiterer Schwingungsmotor mit hohlzylinderförmigem Stator ist aus der Druckschrift DE 43 05 894 bekannt. Bei diesem Motor sind Abflachungen an der Mantelfläche des Hohlzylinders vorgesehen, an denen piezoelektrische Aktoren angeordnet sind.

Ein weiterer Aktuator ist aus der EP 0 297 574 bekannt, bei dem ein bewegbares Element nach dem Stößelprinzip durch einen Schwingungsantrieb einer Stoßkraft ausgesetzt ist. Das bewegbare Element ist in Kontakt mit der Spitze einer piezoelektrischen Antriebseinheit, die durch eine Wechselspannungsanregung eine zyklische Trajektorie beschreibt. Die korrekte Antriebskraft kann bei diesem Motor durch Einstellung des Kontaktdrucks zwischen dem starren beweglichen Körper und der piezoelektrischen Antriebseinheit aufrechterhalten werden.

Aus der EP-A-0 289 734 ist ein Aktuator für ein bewegbares Element mit einem Schwingungsantrieb bekannt, welcher ein flexibles endloses bandförmiges Glied antreibt. Zwei Rollen sind vorgesehen, welche vom bandförmigen Glied umschlungen sind. Der Aktuator besteht aus einem Hohlzylinder, der durch zwei mittels Piezoaktoren in Achsrichtung miteinander verbundene Schrauben 19 so kontrahiert und verdreht wird, daß sich eine elastische Festkörperwelle auf dem Hohlzylinder ausbildet.

Auch aus US-A-5 199 701 ist ein hohlzylinderförmiger Aktuator bekannt, welcher ein langgestrecktes bandförmiges Glied antreibt. Weiterhin ist es notwendig, zum Antreiben des bandförmigen Gliedes Kraftübertragungsmittel zwischenzuschalten.

Aufgabe der vorliegenden Erfindung ist die Weiterentwicklung des Standes der Technik.

Die Aufgabe wird erfindungsgemäß durch die Merkmale des Patentanspruchs 1 gelöst. Danach wird bei dem erfindungsgemäßen Aktuator für ein bewegbares Element mit einem Schwingungsantrieb um das bewegbare Element anzutreiben, wobei das bewegbare Element in Kontakt mit dem Schwingungsantrieb gehalten wird, das bewegbare Element als flexibles, langgestrecktes, band- oder drahtförmiges Element ausgebildet. Bei einem solchen Aktuator erfolgt ein unmittelbarer Kraftabgriff durch das flexible Element, mit dem wiederum ein Antrieb von Rollen oder Hebeln oder ähnlichem erfolgen kann. Bei einem zylinderförmigen Schwingstator, auf dessen Manteloberfläche eine umlaufende Wanderwelle angeregt wird, und bei dem das bewegbare Element den Zylinder teilweise, einfach oder mehrfach umschlingt, ist in einem vorgegebenen Abstand zum Schwingstator eine Rolle angeordnet. Das bewegbare Element umschlingt dabei die Rolle mit gleicher Orientierung wie den Schwingstator. Gegenüber einem Aktuator mit einem starren Rotor können so Kraftübertragungsmechanismen eingespart werden.

Bei einer Ausführungsform werden eine zweite oder mehrere weitere Rollen synchron mit der ersten angetrieben. Zur Regelung des Umschließungsgrads werden bei einer weiteren Ausbildungsform der Erfindung eine oder mehrere Rollen an dem bewegbaren Element mit entgegengesetzter Orientierung wie der Schwingstator umschlungen. Dabei können auch mehrere der Rollen den Schwingstator in Art einer Lagerung halten. In einer weiteren Ausbildungsform der Erfindung sind zwei Rollen elastisch miteinander gekoppelt, um eine Einstellung der Kontaktkraft zwischen Schwingstator und bewegbarem Element vorzunehmen. Bei einer weiteren Ausbildungsform der Erfindung erfolgt eine Lagefixierung des bewegbaren Elements senkrecht zur Zylinderachse dadurch, daß im wesentlichen konzentrisch zur Zylinderachse angeordnete Führungsrinnen in der Manteloberfläche des Schwingstators, die das bewegbare Element aufnehmen, vorgesehen sind. Dies ist besonders vorteilhaft, wenn weitere bewegbare Elemente vorgesehen sind, die gleichzeitig den Zylindermantel umschlingen.

Um eine fortlaufende Rotationsbewegung der angetriebenen Rollen zu erreichen, ist es vorteilhaft, ein endloses bewegbares Element vorzusehen.

Im folgenden wird die Erfindung anhand von Figuren 1 - 10 genauer beschrieben. Im einzelnen zeigt
- Fig. 1: eine Schnittdarstellung längs der Zylinderachse eines bekannten Wanderwellenmotors mit zylinderförmigem Schwingstator,
- Fig. 2: einen erfindungsgemäßen Aktuator, bei dem das bewegbare Element eine Rolle mit gleicher Orientierung wie den Schwingstator umschlingt,
- Fig. 3: einen erfindungsgemäßen Aktuator, bei dem das bewegbare Element eine Rolle mit entgegengesetzter Orientierung wie den Schwingstator umschlingt,
- Fig. 4: einen erfindungsgemäßen Aktuator, bei dem das bewegbare Element zwei Rollen mit entgegengesetzter Orientierung wie den Schwingstator umschlingt,
- Fig. 5: einen erfindungsgemäßen Aktuator, bei dem das bewegbare Element mehrere Rollen mit entgegengesetzter Orientierung wie den Schwingstator umschlingt, die den Schwingstator in Art einer Lagerung halten,
- Fig. 6: einen erfindungsgemäßen Aktuator mit zwei elastisch miteinander gekoppelten Rollen zur Einstellung der Kontaktkraft zwischen Schwingstator und bewegbarem Element, die von einem bewegbaren Element mit entgegengesetzter Orientierung wie der Schwingstator umschlungen sind,
- Fig. 7: einen erfindungsgemäßen Aktuator mit Führungsrinnen zur Aufnahme des bewegbaren Elements,
- Fig. 8: einen erfindungsgemäßen Aktuator mit mehreren bewegbaren Elementen,

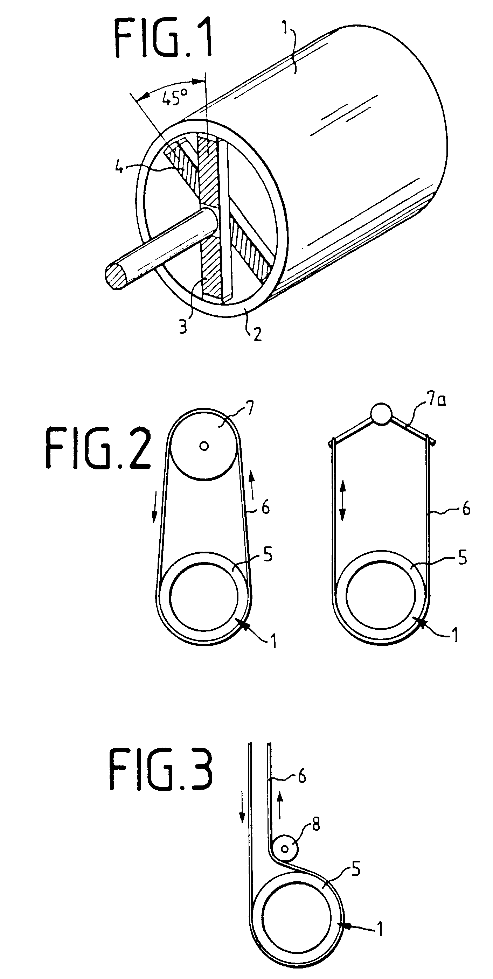

In Fig. 1 ist schematisch der Stator eines aus der DE 42 16 238 bekannten Wanderwellenmotors gezeigt, bei der 1 den Schwingstator, 2 den Zylindermantel des Schwingstators, 3 einen ersten Dehnkörper und 4 einen zweiten Dehnkörper bezeichnet. Die Dehnkörper 3 und 4 bestehen vorzugsweise aus piezoelektrischen Linearelementen oder elektrostriktiven oder magnetostriktiven Elementen. Für den Fachmann ist es selbstverständlich, daß Mittel zur Erzeugung einer mechanischen Vorspannung und zur Ansteuerung der Dehnelemente vorzusehen sind, die jedoch der Einfachheit halber in der Fig. 1 nicht dargestellt sind. Die beiden Dehnkörper sind um einen Winkel von 45° gegeneinander verdreht. Sie sind durch Klemmkräfte an die Innenseite des Zylindermantels 2 gehalten. Ein bewegbarer Körper oder Rotor ist ebenfalls in Fig. 1 nicht dargestellt; er kann, wie an sich bekannt, als Außen- oder Innenläufer auf der Außenoberfläche des Zylindermantels bzw. auf einem freien Bereich der Innenseite der Zylindermanteloberfläche in Kontakt mit dem Zylindermantel angeordnet werden.

Bei dem erfindungsgemäßen Aktuator ist anstelle eines im wesentlichen starren bewegbaren Elements ein flexibles, langgestrecktes band- oder drahtförmiges Glied in Kontakt mit dem Schwingstator angeorndet. Wie in Fig. 2 dargestellt, umschlingt dabei das bewegbare Element 6 den Schwingstator 5. Das bewegbare Element ist an ein Kraftabnahmeorgan gekoppelt, z.B. eine Rolle 7 oder eine Hebelmechanik 7a. Das bewegbare Element besteht vorzugsweise aus einem flexiblen Metallband oder -draht, oder einem Kunststoffmaterial hoher Zugsteifigkeit und Zugfestigkeit, jedoch genügender Biegeelastizität, um sich der Oberfläche des Schwingstators anzuschmiegen.

Durch Erzeugung von Dehnungs- und Stauchungszuständen werden in dem Zylindermantel Wanderwellen angeregt, bei denen die einzelnen Oberflächenpunkte des Mantels sich auf elliptischen Trajektorien bewegen. Zwischen den Oberflächen von Stator und bewegbarem Element entstehen im Kontaktbereich zwischen Stator und bewegbarem Element tangentiale Kräfte, zur Ausbildung einer Bewegung des bewegbaren Elements. Wie an sich bekannt ist, kann durch geeignete Wahl der Phasenbeziehung zwischen den die Wanderwellen konstituierenden Stehwellen die Umlaufrichtung der Wanderwellen bestimmt werden. Umschlingt dabei das bewegbare Element eine Rolle mit gleicher Orientierung wie den Schwingstator, so erfolgt der Antrieb der Rolle entgegengesetzt zur Umlaufrichtung der Wanderwellen um den Stator. Umschlingt das bewegbare Element eine Rolle mit entgegengesetzter Orientierung, so erfolgt analog ein Antrieb der Rolle in Umlaufrichtung der Wanderwellen.

Fig. 3 zeigt einen Aktuator, bei dem das bewegbare Element 6 eine Rolle 8 mit entgegengesetzter Orientierung wie den Schwingstator umschlingt. Durch die Veränderung der relativen Lage dieser Rolle gegenüber den eine weitere Rolle oder einen Hebelmechanismus antreibenden bewegbaren Element 6 kann der Umschlingungsgrad des Stators 1 variiert werden.

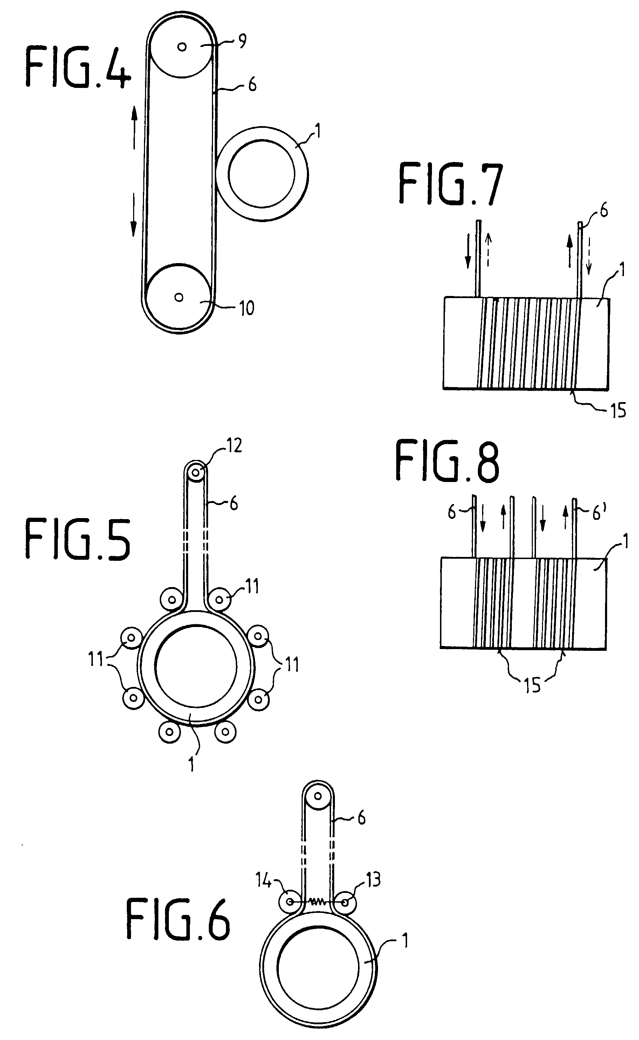

Bei einer weiteren Ausführungsform der Erfindung, Fig. 4, umschlingt das bewegbare Element 6 zwei Rollen 9 und 10 in entgegengesetzter Orientierung wie den Schwingstator. Diese Rollen werden somit synchron angetrieben.

Bei einer anderen Ausführungsform der Erfindung, Fig. 5, sind eine Anzahl von Rollen konzentrisch um den Zylinder angeordnet und halten den Schwingstator innerhalb einer Lagerung. Diese Rollen werden gleichzeitig durch das bewegbare Element angetrieben. Zwischen zweien dieser Rollen wird das bewegbare Element in Richtung einer Rolle 12 oder eines Hebelmechanismus geführt.

Bei einer weiteren Ausführungsform werden zwei Rollen 13 und 14 mit entgegengesetzter Orientierung wie der Schwingstator von dem bewegbaren Element umschlungen, wobei diese Rollen elastisch miteinander gekoppelt sind, so daß die Kontaktkraft zwischen Schwingstator und bewegbarem Element einstellbar ist.

Das bewegbare Element kann den Stator teilweise, einfach oder mehrfach umschlingen. Bei der Ausführungsform der Fig. 7 sind in der Manteloberfläche des hohlzylinderförmigen Schwingstators Führungsrinnen 15 vorgesehen, mit denen die Lage des bewegbaren Elements relativ zur Zylinderachse fixiert wird. Die Führungsrinnen sind hierfür schrauben- oder spiralförmig um den Zylinder geführt. Solche Führungsrinnen sind insbesondere bei der Verwendung von mehreren bewegbaren Körpern 6, 6' auf einem Schwingstator angebracht, der damit auch ihre relative Lage gegeneinander fixiert und ein unerwünschter Kontakt zwischen den bewegbaren Elementen verändert werden kann.

Vorzugsweise ist vorgesehen, daß das bewegbare Element endlos ist.

## Patentansprüche

1. Aktuator für ein bewegbares Element (6) mit einem Schwingungsantrieb (1, 17), um das bewegbare Element anzutreiben, wobei das bewegbare Element in Kontakt mit dem Schwingungsantrieb gehalten wird und das bewegbare Element als flexibles langgestrecktes band- oder drahtförmiges Gebilde ausgebildet ist,
wobei
als Schwingungsantrieb ein im wesentlichen hohlzylinderförmiger Schwingstator (1) vorgesehen ist, auf dessen Manteloberfläche eine umlaufende Wanderwelle angeregt wird und das bewegbare Element (6) den Schwingstator teilweise, einfach oder mehrfach umschlingt und eine in einem vorgegebenen Abstand zum Schwingstator angeordnete Rolle (7) oder Hebelmechanik (7a) oder ein an dem bewegbaren Element (6) befestigtes Teil von dem bewegbaren Element (6) angetrieben wird.

2. Aktuator nach Anspruch 1,
dadurch gekennzeichnet,
daß das bewegbare Element (6) durch die Rolle (7) mit gleicher Orientierung wie der Schwingstator (1) umschlingt.

3. Aktuator nach Anspruch 2,
dadurch gekennzeichnet,
daß eine zweite oder mehrere weitere Rollen vorgesehen sind und daß das bewegbare Element (6) die weiteren Rollen mit gleicher Orientierung wie den Schwingstator (1) umschlingt.

4. Aktuator nach Anspruch 1-3,
dadurch gekennzeichnet,
daß eine oder mehrere Rollen (9, 10) vorgesehen sind, die vom bewegbaren Element (6) mit entgegengesetzter Orientierung wie der Schwingstator (1) umschlungen werden.

5. Aktuator nach Anspruch 1 bis 4,
dadurch gekennzeichnet,
daß mehrere der Rollen (11) die von dem bewegbaren Element (6) mit entgegengesetzter Orientierung wie der Schwingstator (1) umschlungen werden, den Schwingstator in einer Art Lagerung halten.

6. Aktuator nach Anspruch 1 bis 5,
dadurch gekennzeichnet,
daß zwei der Rollen (14, 13), die von dem bewegbaren Element (6) mit entgegengesetzter Orientierung wie der Schwingstator (1) umschlungen sind, elastisch miteinander zur Einstellung der Kontaktkraft zwischen Schwingstator (1) und bewegbarem Element (6) gekoppelt sind.

7. Aktuator nach Anspruch 1 bis 6,
dadurch gekennzeichnet,
daß in der Manteloberfläche des Schwingstators (1) im wesentlichen konzentrisch zur Zylinderachse angeordnete Führungsrinnen (15) zur Aufnahme des bewegbaren Elements (6) vorgesehen sind.

8. Aktuator nach Anspruch 1,
dadurch gekennzeichnet,
daß zusätzlich zu dem bewegbaren Element (6) ein oder mehrere weitere bewegbare Elemente (6') vorgesehen sind, die den Zylindermantel umschlingen, wobei für jedes dieser Elemente im wesentlichen konzentrisch zur Zylinderachse angeordnete Führungsrinnen (15) vorgesehen sind.

9. Aktuator nach Anspruch 1,
dadurch gekennzeichnet,
daß Mittel (19, 20) zur Ausübung und Adjustierung einer Stoßkraft zwischen dem Schwingungsantrieb (17) und dem bewegbaren Element (6) vorgesehen sind.

10. Aktuator nach Anspruch 1 bis 7 oder 9,
dadurch gekennzeichnet,
daß ein endloses bewegbares Band als bewegbares Element (6) vorgesehen ist.

## Claims

1. Actuator for a movable element (6) with an oscillating drive (1, 17) in order to drive the movable element, wherein the movable element is kept in contact with the oscillating drive and the movable element is constructed as a flexible elongate band-like or wire-like structure, wherein there is provided as the oscillating drive a substantially hollow cylindrical oscillatory stator (1), at the circumferential surface of which a circulating travelling wave is excited and the movable element (6) loops around the oscillatory stator partly, one time or several times and a roller (7) or lever mechanism (7a) arranged at a predetermined spacing from the oscillatory stator or a part fastened to the movable element (6) is driven by the movable element (6).

2. Actuator according to claim 1, characterised in that the movable element (6) loops around [by] the roller (7) with the same orientation as the oscillatory stator (1).

3. Actuator according to claim 2, characterised in that a second roller is or several further rollers are provided and that the movable element (6) loops around the further roller or rollers with the same orientation as the oscillatory stator (1).

4. Actuator according to claim 1 to 3, characterised in that one or more rollers (9, 10) is or are provided and looped around by the movable element (6) with opposite orientation to the oscillatory stator (1).

5. Actuator according to claim 1 to 4, characterised in that several of the rollers (11), which are looped around by the movable element (6) with opposite orientation to the oscillatory stator (1), hold the oscillatory stator in a form of mounting.

6. Actuator according to claim 1 to 5, characterised in that two of the rollers (14, 13), which are looped around by the movable element (6) with opposite orientation to the oscillatory stator (1), are resiliently coupled together for setting of the contact force between the oscillatory stator (1) and movable element (6).

7. Actuator according to claim 1 to 6, characterised in that guide grooves (15) for receiving the movable element (6) are provided in the circumferential surface of the oscillatory stator (1) substantially concentrically with the cylinder axis.

8. Actuator according to claim 1, characterised in that in addition to the movable element (6) one or more further movable elements (6') is or are provided and loop around the cylinder circumference, wherein guide grooves (15) arranged substantially concentrically with the cylinder axis are provided for each of these elements.

9. Actuator according to claim 1, characterised in that means (19, 20) for exerting and adjusting a motive power between the oscillating drive (17) and the movable element (6).

10. Actuator according to claim 1 to 7 or 9, characterised in that an endless movable belt is provided as the movable element (6).

## Revendications

1. Organe d'actionnement pour un élément mobile (6) avec une commande génératrice d'oscillations (1, 17) pour entraîner l'élément mobile, où l'élément mobile est maintenu en contact avec la commande génératrice d'oscillations et l'élément mobile est réalisé sous forme de structure flexible oblongue, en forme de bande ou de fil,
où il est prévu comme commande génératrice d'oscillations un stator oscillant (1) sensiblement en forme de cylindre creux sur la surface d'enveloppe duquel est excitée une onde mobile tournante, et l'élément mobile (6) entoure le stator oscillant partiellement, une fois ou plusieurs fois, et un galet (7) disposé selon un écart prédéterminé relativement au stator oscillant ou une mécanique à leviers (7a) ou une pièce fixée à l'élément mobile (6) est entraîné par l'élément mobile (6).

2. Organe d'actionnement selon la revendication 1,
caractérisé en ce que
l'élément mobile (6) entoure le galet (7) selon la même orientation que le stator oscillant (1).

3. Organe d'actionnement selon la revendication 2,
caractérisé en ce qu'
un deuxième galet ou plusieurs galets supplémentaires sont prévus et que l'élément mobile (6) entoure les galets supplémentaires selon la même orientation que le stator oscillant (1).

4. Organe d'actionnement selon les revendications 1-3,
caractérisé en ce qu'
un ou plusieurs galets (9, 10) sont prévus qui sont entourés par l'élément mobile (6) selon une orientation opposée au stator oscillant (1).

5. Organe d'actionnement selon la revendication 1 à 4,
caractérisé en ce que
plusieurs des galets (11) qui sont entourés par l'élément mobile (6) selon une orientation opposée au stator oscillant (1), maintiennent le stator oscillant dans une sorte de logement.

6. Organe d'actionnement selon la revendication 1 à 5,
caractérisé en ce que
deux des galets (14, 13) qui sont entourés par l'élément mobile (6) selon une orientation opposée au stator oscillant (1), sont accouplés l'un à l'autre élastiquement pour régler la force de contact entre le stator oscillant (1) et l'élément mobile (6).

7. Organe d'actionnement selon la revendication 1 à 6,
caractérisé en ce que
sont prévues dans la surface d'enveloppe du stator oscillant (1) des rainures de guidage (15) disposées sensiblement concentriquement à l'axe de cylindre pour la réception de l'élément mobile (6).

8. Organe d'actionnement selon la revendication 1,
caractérisé en ce que
sont prévus en plus de l'élément mobile (6) un ou plusieurs éléments mobiles supplémentaires (6') qui entourent l'enveloppe du cylindre, où sont prévues pour chacun de ces éléments, des rainures de guidage (15) disposées sensiblement concentriquement à l'axe du cylindre.

9. Organe d'actionnement selon la revendication 1,
caractérisé en ce que
des moyens (19, 20) sont prévus pour exercer et ajuster une force de poussée entre la commande génératrice d'oscillations (17) et l'élément mobile (6).

10. Organe d'actionnement selon la revendication 1 à 7 ou 9,
caractérisé en ce qu'
une bande mobile sans fin est prévue comme élément mobile (6).
